# EUROPEAN PATENT APPLICATION

(11) **EP 2 305 032 A1**
(43) Date of publication of application: **06.04.2011**
(21) Application number: 10189057.2
(22) Date of filing: 26.02.2008
(51) Int. Cl.: A01N 43/40, A01N 39/04, A01N 39/02, A01N 43/50, A01N 33/04, A01P 13/00

(54) **Ionic liquids derived from herbicidal carboxylic acids and certain trialkylamines or heteroarylamines**

(30) Priority: 26.02.2007 US 903418 P
(62) Divisional of application: 08726083.2
(71) Applicant: Dow AgroSciences LLC, Indianapolis, Indiana 46268-1054 (US)
(72) Inventor: Kramer, Vincent, J., Westfield, IN 46074 (US); Ouse, David, G., Indianapolis, IN 46256 (US); Pearson, Norman, R., Carmel, IN 46032 (US); Tank, Holger, Zionsville, IN 46077 (US); Zettler, Mark, W., Carmel, IN 46033 (US)
(74) Representative: Dey, Michael

(57) **Abstract**

Ionic liquids, formed by combining a carboxylic acid herbicide with certain trialkylamines or heteroarylamines, have herbicidal activity on an acid equivalent basis at least as active as the commercially used carboxylic acid herbicide salts, but are less volatile.

## Description

This application claims the benefit of United States Provisional Application Serial Number 60/903,418 filed on February 26, 2007. The present invention relates to ionic compounds (liquids) formed by combining a carboxylic acid herbicide with a trialkylamine or a heteroarylamine.

Ionic compounds can sometimes exist in liquid form. Ionic liquids are low melting salts obtained by the combination of large organic cations with a variety of anions; see, for example, Chemical & Engineering News, 84, 15-21 (2006) and J. Phys. Org. Chem., 18, 275-297 (2004). Ionic liquids typically have melting points below 100 °C. Ionic liquids with organic anions are also described in Polish J. Chem., 77, 975-984 (2003).

Acid herbicides such as 2,4-dichlorophenoxyacetic acid (2,4-D) have long been used to control unwanted vegetation. 2,4-D is normally converted into liquid formulations by conversion to water soluble salts or emulsified esters. The ester formulations have been found to be more effective than the salts on an acid equivalent basis in the control of noxious vegetation but have the unwanted characteristic of migrating to adjacent desirable vegetation because of the volatility thereof, resulting in unacceptable damage to sensitive plants.

Efforts to solve the volatility problem, including preparation of water soluble salts such as the dimethylamine salt of 2,4-D, have not been totally satisfactory because, upon volatilization of the amine, the herbicide reverts back to its initial acid form, which, in itself under certain unfavorable conditions, has sufficient volatility to cause damage to sensitive crops.

2,4-D ester or 2,4-D dimethylamine formulations applied during the warm summer months can lead to vapor drift from the evaporation of the herbicide from sprayed surfaces and subsequent damage to highly susceptible crops such as tomatoes, cotton, soybeans, sunflowers and grapes. This may occur within hours after the herbicide application.

Thus it would be desirable to have an herbicidal carboxylic acid derivative that is at least as active as the commercially used carboxylic acid herbicide salts, but which is less volatile so that its use would not damage nearby sensitive crops.

It has now been found that ionic liquids formed by combining a carboxylic acid herbicide with certain trialkylamines or heteroarylamines have herbicidal activity on an acid equivalent basis at least comparable to the commercially used carboxylic acid herbicide salts, but with reduced volatility. The present invention concerns herbicidal ionic liquids comprising the reaction product of an herbicidal carboxylic acid and either a 1-((C₁-C₂ₐ) alkyl- or arylalkyl)imidazole, an N-((C₂-C₂₀) alkyl or arylalkyl)-N,N-dimethylamine, an N-((C₂-C₂₀) alkyl or arylalkyl)pyrrolidine or a tri(C₁-C₂₀) alkylamine where the three alkyl groups can be the same or different, provided the total number of carbon atoms exceeds 9. The invention includes herbicidal compositions comprising an herbicidally effective amount of such ionic liquids in admixture with an agriculturally acceptable adjuvant or carrier. The invention also includes a method of use of the ionic liquids and their compositions of the present invention to kill or control undesirable vegetation by application of an herbicidal amount of the ionic liquid to the vegetation or to the locus of the vegetation as well as to the soil prior to emergence of the vegetation.

Unless specifically limited otherwise, the term "alkyl", as well as derivative terms such as "arylalkyl", as used herein, include within their scope straight chain, branched chain and cyclic moieties. Unless specifically stated otherwise, each may be unsubstituted or substituted with one or more substituents selected from but not limited to halogen, hydroxy, alkoxy or alkylthio, provided that the substituents are sterically compatible and the rules of chemical bonding and strain energy are satisfied. The term "aryl" refers to a phenyl, indanyl or naphthyl group. The aryl group may be unsubstituted or substituted with one or more substituents selected from halogen, hydroxy, C₁-C₆ alkyl or C₁-C₆ alkoxy, provided that the substituents are sterically compatible and the rules of chemical bonding and strain energy are satisfied. The term "arylalkyl" refers to C₁-C₄ alkyl groups substituted with an aryl group. The term "heteroaryl" refers to an imidazole, pyrazole, pyrrole, triazole, pyridine, pyrimidine or triazine group. The heteroaryl group may be unsubstituted or substituted with one or more substituents selected from halogen, hydroxy, C₁C₂₀ alkyl, C₁-C₆ alkoxy, C₁-C₆ alkylamino, di(C₁-C₆ alkyl)amino or arylalkyl, provided that the substituents are sterically compatible and the rules of chemical bonding and strain energy are satisfied.

Herbicidal carboxylic acids mean those herbicides containing a carboxylic acid group and includes *benzoic acid herbicides* such as chloramben, dicamba, 2,3,6-TBA and tricamba; *organophosphorus herbicides* such as glufosinate and glyphosate; *pyrimidinyloxybenzoic acid herbicides* such as bispyribac and pyriminobac; *phthalic acid herbicides* such as chlorthal; *pyridine carboxylic acid herbicides* such as aminopyralid, clopyralid, fluroxypyr, picloram and triclopyr; *quinolinecarboxylic acid herbicides* such as quinclorac and quinmerac; *phenoxyacetic herbicides* such as 4-CPA, 2,4-D, 3,4-DA and MCPA; *phenoxybutyric herbicides* such as 4-CPB, 2,4-DB, 3,4-DB and MCPB; *phenoxypropionic herbicides* such as cloprop, 4-CPP, dichlorprop, 3,4-DP, fenoprop, mecoprop and mecoprop-P; and *aryloxyphenoxypropionic herbicides* such as chlorazifop, clodinafop, clofop, cyhalofop, diclofop, fenoxaprop, fluazifop, haloxyfop, isoxapyrifop, metamifop, propaquizafop, quizalofop and trifop. Preferred herbicidal carboxylic acids are 2,4-D, triclopyr, aminopyralid, clopyralid, fluroxypyr, picloram,cyhalofop, fluazifop, haloxyfop, clodinafop, fenoxaprop, dicamba, glufosinate and glyphosate.

### 1-((C₁-C₂₀) Alkyl or arylalkyl)imidazole refers to compounds of the formula

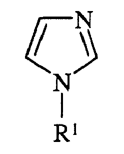

wherein R¹ represents (C₁-C₂₀) alkyl or arylalkyl. Preferred imidazoles include *N*-ethylimidazole, *N*-butylimidazole, N-octylimidazole and *N*-(4-methylbenzyl)imidazole.

### N-((C₂-C₂₀) Alkyl or arylalkyl)-N,N-dimethylamine refers to compounds of the formula

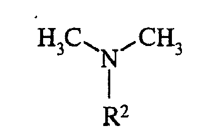

wherein R² represents (C₂-C₂₀) alkyl or arylalkyl.
Preferred dimethylamines include *N*-hexyl-*N*,*N*-dimethylamine, *N* octyl-*N*,*N* dimethylamine, *N*-decyl-*N,N*-dimethylamine, *N*-dodecyl-*N*,*N*-dimethylamine, *N-*tetradecyl-*N*,*N*-dimethylamine, *N*-hexadecyl- *N,N*-dimethylamine;*N*-benzyl-*N*,*N* dimethylamine and 4-dimethylaminobutanol.

### N-((C₂-C₂o) Alkyl or arylalkyl) pyrrolidine refers to compounds of the formula

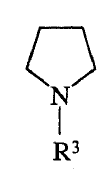

wherein R³ represents (C₂-C₂₀) alkyl or arylalkyl.
Preferred pyrrolidines include *N*-hexyl pyrrolidine, *N*-octyl pyrrolidine, *N*-decyl pyrrolidine, *N*-dodecyl pyrrolidine, *N*-tetradecyl pyrrolidine, *N*-hexadecyl pyrrolidine, *N*-benzyl pyrrolidine.

Tri(C₁-C₂ₒ) alkylamine refers to compounds of the formula 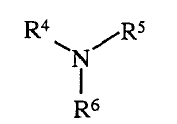 wherein R⁴, R⁵ and R⁶ independently represents (C₁-C₂₀) alkyl and the total number of carbon atoms in R⁴ + R⁵ + R⁶ 9.
Preferred trialkylamines are those in which R⁴, R⁵ and R⁶ are the same, for example, tributylamine, triisobutylamine, tripentylamine, trihexylamine, triheptylamine and trioctylamine. Other preferred trialkylamines include N-methyldioctylamine.

The ionic liquids of the present invention can be conveniently prepared by reaction of the herbicidal carboxylic acid with an appropriate trialkylamine or imidazole. The herbicidal carboxylic acid is mixed with the trialkylamine or imidazole in a solvent like methanol followed by removal of the solvent and any water generated under vacuum.

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinant seeds, emerging seedlings and established vegetation.

Herbicidal activity is exhibited by the ionic liquids of the present invention when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action.

Application rates of 1 to 2,000 g/Ha are generally employed in both postemergence and preemergence applications. The higher rates designated generally give non-selective control of a broad variety of undesirable vegetation. The lower rates typically give selective control and can be employed in the locus of crops.

The ionic liquids of the present invention are often applied in conjunction with one or more other herbicides to control a wider variety of undesirable vegetation. When used in conjunction with other herbicides, the presently claimed ionic liquids can be formulated with the other herbicide or herbicides, tank mixed with the other herbicide or herbicides or applied sequentially with the other herbicide or herbicides. The ionic liquids of the present invention can, further, be used in conjunction with glyphosate, glufosinate or 2,4-D on glyphosate-tolerant, glufosinate-tolerant or 2,4-D-tolerant crops. It is generally preferred to use the ionic liquids of the invention in combination with herbicides that are selective for the crop being treated and which complement the spectrum of weeds controlled by these compounds at the application rate employed. It is further generally preferred to apply the ionic liquids of the invention and other complementary herbicides at the same time, either as a combination formulation or as a tank mix.

The ionic liquids of the present invention can generally be employed in combination with known herbicide safeners, such as benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, isoxadifen-ethyl, mefenpyr-diethyl, MG 191, MON 4660, naphthalic anhydride (NA), oxabetrinil, R29148 and N-phenylsulfonylbenzoic acid amides, to enhance their selectivity. They can additionally be employed to control undesirable vegetation in many crops that have been made tolerant to or resistant to them or to other herbicides by genetic manipulation or by mutation and selection. For example, corn, wheat, rice, soybean, sugarbeet, cotton, canola, and other crops that have been made tolerant or resistant to compounds that are acetolactate synthase inhibitors in sensitive plants can be treated. Many glyphosate and glufosinate tolerant crops can be treated as well, alone or in combination with these ionic liquids. Some crops (e.g. cotton) have been made tolerant to auxinic herbicides such as 2,4-dichlorophenoxy-acetic acid. These ionic liquids may be used to treat such resistant crops or other auxin tolerant crops.

While it is possible to utilize the ionic liquids directly as herbicides, it is preferable to use them in mixtures containing a herbicidally effective amount of the compound along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with the ionic liquids or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures of the invention are well known to those skilled in the art.

Liquid carriers that can be employed include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the herbicidal compositions of this invention is generally from 0.001 to 98 percent by weight. Concentrations from 0.01 to 90 percent by weight are often employed. In compositions designed to be employed as concentrates, the active ingredient is generally present in a concentration from 5 to 98 weight percent, preferably 10 to 90 weight percent. Such compositions are typically diluted with an inert carrier, such as water, before application. The diluted compositions usually applied to weeds or the locus of weeds generally contain 0.001 to 2 weight percent active ingredient and preferably contain 0.01 to 1 weight percent.

The present compositions can be applied to weeds or their locus by the use of conventional ground or aerial dusters, sprayers, and granule applicators, by addition to irrigation water, and by other conventional means known to those skilled in the art.

The following Examples are presented to illustrate the various aspects of this invention and should not be construed as limitations to the claims.

### General Preparative Example:

The carboxylic acid herbicide and the alkyl- or (arylalkyl)-*N,N-*dimethylamine, trialkylamine, 1-(alkyl or arylalkyl)imidazole or *N*-((C₂-C₂₀) alkyl or arylalkyl) pyrrolidine are combined in equimolar amounts in methanol at room temperature to give a solution of the amine salt of the carboxylic acid. The product is then isolated by evaporative removal of the methanol (and any water present) at room temperature to 50 °C. The isolated products may be purified by methods known in the art to provide the compounds of the present invention as liquids or solids. Table I below lists the compounds prepared in this manner with their physical state and MP where applicable.

**TABLE I**

| **Compound Number** | **Amine** | **Herbicidal acid** | **Physical form** | **Melting point range, °C** |
|---|---|---|---|---|
| 1a | N-ethylimidazole | 2,4-D | solid | 72-80 |
| 1b | N-butylimidazole | 2,4-D | solid | 56-58 |
| 1c | N-octylimidazole | 2,4-D | liquid | NA |
| 1d | N-4-raethylbenzylimidazole | 2,4-D | solid | 68-78 |
| | | | | |
| 2a | N-ethylimidazole | triclopyr | solid | 101-103 |
| 2b | N-butylimidazole | triclopyr | solid | 51-53 |
| 2c | N-octylimidazole | triclopyr | liquid | NA |
| 2d | N-4-methylbenzylimidazole | triclopyr | solid | 66-68 |
| 2e | N-butylimidazole | cyhalofop | liquid | NA |
| | | | | |
| 3a | 4-dimethylaminobutanol | 2,4-D | liquid | NA |
| 3b | N-hexyl-N,N-dimethylamine | 2,4-D | liquid | NA |
| 3c | N-octyl-N,N-dimethylamine | 2,4-D | solid | 35-43 |
| 3d | N-decyl-N,N-dimethylamine | 2,4-D | solid | 43-45 |
| 3e | N-dodecyl-N,N-dimethylamine | 2,4-D | liquid | NA |
| 3f | N-tetradecyl-N,N-dimethylamine | 2,4-D | solid | 41-43 |
| 3g | N-hexadecyl-N,N-dimethylamine | 2,4-D | solid | 53-55 |
| 3h | N-benzyl-N,N-dimethylamine | 2,4-D | liquid | NA |
| | | | | |
| 4a | 4-dimethylaminobutanol | triclopyr | solid | 77-79 |
| 4b | N-hexyl-N,N-dimethylamine | triclopyr | liquid | NA |
| 4c | N-octyl-N,N-dimethylamine | triclopyr | solid | 60-63 |
| 4d | N-decyl-N,N-dimethylamine | triclopyr | liquid | NA |
| 4e | N-dodecyl-N,N-dimethylamine | triclopyr | solid | 46-48 |
| 4f | N-tetradecyl-N,N-dimethylamine | triclopyr | solid | 57-60 |
| 4g | N-hexadecyl-N,N-dimethylamine | triclopyr | solid | 62-65 |
| 4h | N-benzyl-N,N-dimethylamine | triclopyr | liquid | NA |
| 4i | N-octyl-N,N-dimethylamine | cyhalofop | liquid | NA |
| 4j | N-tetradecyl-N,N-dimethylamine | cyhalofop | liquid | NA |
| 4k | N-benzyl-N,N-dimethylamine | cyhalofop | liquid | NA |

| | | | | |
|---|---|---|---|---|
| Post-emergence application methods for Herbicide Evaluations. | | | | |

A peat based potting soil, Metro-mix 360, was used as the soil media for , this test. Metro-mix is a growing medium consisting of 35 to 45% specially processed Coconut Coir Pith, 10 to 20% horticultural grade vermiculite, 15 to 25% processed Ash Bark, 20 to 30% choice Canadian Sphagnum Peat Moss and proprietary nutrients and other ingredients. Several seeds of each species were planted in 10 cm square pots and top watered twice daily. Plant material was propagated in the greenhouse at a constant temperature of 26 to 28 °C and 50 to 60% relative humidity. Natural light was supplemented with 1000-watt metal halide overhead lamps with an average illumination of 500 µE m⁻² s⁻¹ photosynthetic active radiation (PAR). Day length was 16 hours. Plant material was top-watered prior to treatment and sub-irrigated after treatment. Treatments were applied with a tracksprayer manufactured by Allen Machine Works. The sprayer utilized an 8003E spray nozzle, spray pressure of 262 kPa pressure and speed of 2.8 mph (4.5 km/h) to deliver 187 L/Ha. The nozzle height was 46 cm above the plant canopy. The growth stage of the various weed species ranged from 2 to 4 leaf. Treatments were replicated 3 times. Plants were returned to the greenhouse after treatment and sub-watered throughout the duration of the experiment. Plant material was fertilized twice weekly with Hoagland's fertilizer solution. Percent visual injury assessments were made on a scale of 0 to 100% as compared to the untreated control plants (where 0 is equal to no injury and 100 is equal to complete death of the plant). The results are listed in Tables II and III.

**TABLE II. Efficacy data generated in the greenhouse for 2,4-D and triclopyr on broadleaf weeds. Data are from evaluations taken 14 days after application.**

| Treatment / Compound Number | Rate (g ae/ha) | Broadleaf Dock *Rumex obtusifolia* | Kochia Kochia scoparia |
|---|---|---|---|
| | | ---------------- % Control ---------------- | |
| 2,4-D dimethylamine (DMA) | 560 | 40 | 76 |
| 2,4-D butoxyethylester (BEE) | 560 | 96 | 95 |
| #1c | 560 | 82 | 97 |
| # 3b | 560 | 73 | 97 |
| Triclopyr triethylamine (TEA) | 560 | 40 | 93 |
| Triclopyr butoxyethylester (BEE) | 560 | 79 | 95 |
| 2c | 560 | 52 | 92 |
| 4b | 560 | 49 | 96 |

**Table III. Efficacy data generated in the greenhouse for cyhalofop on grass weeds. Data are from evaluations taken 14 days after application.**

| Treatment / Compound Number | Rate (g ae/ha) | Barnyardgrass *Echinochloa crus-galli* | Large Crabgrass *Digitaria Sanguinalis* |
|---|---|---|---|
| | | ----------- % Control ------------- | |
| cyhalofop Bu-ester | 240 | 100 | 92 |
| 4i | 240 | 100 | 78 |
| 4j | 240 | 100 | 82 |
| 4k | 240 | 100 | 85 |

### Methods for evaluating the volatility of 2,4-D standards and ionic liquids of 2,4-D.

Four pots of wheat (*Triticum aestivum* L.) grown in 4 inch square pots were sprayed at 11200 g ae/ha with each of the different forms of 2,4-D. Treatments were applied with a tracksprayer manufactured by Allen Machine Works. The sprayer utilized an 8002E spray nozzle, spray pressure of 262 kPa pressure and speed of 1.5 mph (2.4 km/h) to deliver 187 L/Ha. The nozzle height was 46 cm above the plant canopy. The growth stage of the wheat was 1 to 2 leaf. The wheat plants were allowed to thoroughly dry to ensure that none of the spray solution was present when they were moved into a clean pot flat. A known sensitive species, grapes ( *Vitis labrusca L. )* were placed at the opposite end of the flat. All of the pots were covered with a humidome with small½ inch (1.27 cm) diameter holes cut into the end where the wheat was placed and a small box fan powered with a battery in the other end to pull air across the treated wheat plants and over the top of grapes. Plants were placed into a growth chamber with the temperature set at 40 °C with a 14 hour day and a 10 hour night cycle. A 24 hour exposure period was used after which the sensitive plants were then removed and placed in the greenhouse and evaluated for injury from vapor exposure to the treatments. The results are listed in Table IV.

**Table IV. Injury to grapes from vapor exposure for 24 hours to various forms of 2,4-D. Evaluations were taken 7 days after exposure to the vapors.**

| Treatment / Compound Number | --------------------------- % Injury --------------------------- |
|---|---|
| 2,-4-D butoxyethylester (BEE) | 100 |
| 2,-4-D dimethylamine (DMA) | 78 |
| 3c | 0 |
| 3g | 0 |

The invention further comprises the following items:
1. An herbicidal ionic liquid comprising the reaction product of an herbicidal carboxylic acid and either a 1-((C₁-C₂₀) alkyl or arylalkyl)imidazole, an N ((C₂-C₂₀) alkyl or arylatkyl)-*NN*-dimethylamine, an *N*-((C₂-C₂₀) alkyl or arylalkyl)pyrrolidine or a tri(C1-C₂₀) alkylamine in which the total number of carbon atoms is greater than 9.
2. An herbicidal ionic liquid of item 1 in which the herbicidal carboxylic acid is 2,4-D, triclopyr, aminopyralid, clopyralid, fluroxypyr, picloram, cyhalofop, fluazifop, haloxyfop, clodinafop, fenoxaprop, dicamba, glufosinate or glyphosate.
3. An herbicidal ionic liquid of item, 1 in which thel-((C₁-C₂₀) alkyl or arylalkyl)imidazole is *N*-ethylimidazole, *N*-butylimidazole, *N-*octylimidazole or *N*-(4-methylbenzyl)imidazole.
4. An herbicidal ionic liquid of i tem 1 in which the *N*-((C₂-C₂₀) alkyl or arylalkyl)-*N*,*N*-dimethylamine is *N*-hexyl-*NN*-dimethylamine, *N-octyl-N*,*N*-dimethylamine, *N*-decyl-*N*,*N-*dimethylamine, *N*-dodecyl-*N*,*N*-dimethylarnine, *N*-tetradecyl-*N*,*N*-dimethylamine, *N* hexadecyl-*N*,*N*-dimethylamine, *N*-benzyl-*NN*-dimethylamine or 4-dimethylaminobutanol.
5. An herbicidal ionic liquid of i tem 1 in which the *N*-((C₂-C₂₀) alkyl or arylalkyl)pyrrolidine is *N*-hexyl pyrrolidine, *N-*octyl pyrrolidine, *N-*decyl pyrrolidine, *N*-dodecyl pyrrolidine, *N*-tetradecyl pyrrolidine, *N*-hexadecyl pyrrolidine, *N*-benzyl pyrrolidine.
6. An herbicidal ionic liquid of item 1 in which the tri(C₁-C₂₀) alkylamine is tributylamine, triisobutylamine, tripentylamine, trihexylamine, triheptylamine, trioctylamine or *N*-methyldioctylamine.
7. An herbicidal compound of item 2 in which the herbicidal carboxylic acid is 2,4-D.
8. An herbicidal composition comprising an herbicidally effective amount of an ionic liquid, as defined in item 1, or a mixture thereof, in admixture with an agriculturally acceptable adjuvant or carrier.
9. A method of controlling undesirable vegetation which comprises contacting the vegetation or the locus thereof with, or applying to the soil to prevent the emergence of vegetation, an herbicidally effective amount of an ionic liquid, as defined in item 1.

## Claims

1. An herbicidal ionic liquid comprising the reaction product of an herbicidal carboxylic acid and an N-((C₂-C₂₀) alkyl or arylalkyl)-N,N-dimethylamine.

2. An herbicidal ionic liquid of Claim 1 in which the herbicidal carboxylic acid is 2,4-D, triclopyr, aminopyralid, clopyralid, fluroxypyr, picloram, cyhalofop, fluazifop, haloxyfop, clodinafop, fenoxaprop, dicamba, glufosinate or glyphosate.

3. An herbicidal ionic liquid of Claim 1 in which the N-((C₂-C₂₀) alkyl or arylalkyl)-N,N-dimethylamine is N-hexyl-N,N-dimethylamine, N-octyl-N,N-dimethylamine, N-decyl-N,N-dimethylamine, N-dodecyl-N,N-dimethylamine, N-tetradecyl-NN-dimethylamine, N-hexadecyl-N,N-dimethylamine, N-benzyl-N,N-dimethylamine or 4-dimethylaminobutanol.

4. An herbicidal compound of Claim 2 in which the herbicidal carboxylic acid is 2,4-D.

5. An herbicidal composition comprising an herbicidally effective amount of an ionic liquid, as claimed in Claim 1 , or a mixture thereof, in admixture with an agriculturally acceptable adjuvant or carrier.

6. A method of controlling undesirable vegetation which comprises contacting the vegetation or the locus thereof with, or applying to the soil to prevent the emergence of vegetation, an herbicidally effective amount of an ionic liquid, as claimed Claim 1.
